(19) 

Europäisches
Patentamt
European
Patent Office
Office européen
des brevets

(11) **EP 2 299 720 A1**

(12) **EUROPEAN PATENT APPLICATION**
published in accordance with Art. 153(4) EPC

(43) Date of publication:
**23.03.2011  Bulletin 2011/12**

(51) Int Cl.:
*H04N 7/32* (2006.01)          *H04N 7/30* (2006.01)
*H04N 11/04* (2006.01)

(21) Application number: **09773577.3**

(22) Date of filing: **03.07.2009**

(86) International application number:
**PCT/JP2009/062216**

(87) International publication number:
**WO 2010/001999 (07.01.2010 Gazette 2010/01)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **04.07.2008  JP 2008175854**

(71) Applicant: **Kabushiki Kaisha Toshiba
Minato-ku
Tokyo 105-8001 (JP)**

(72) Inventors:
  • **WATANABE, Takashi**

    **(JP)**

• **YASUDA, Goki**

  **(JP)**
• **WADA, Naofumi**

  **(JP)**
• **CHUJOH, Takeshi**

  **(JP)**
• **TANIZAWA, Akiyuki**

  **(JP)**

(74) Representative: **Maury, Richard Philip
Marks & Clerk LLP
90 Long Acre
London
WC2E 9RA (GB)**

(54) **DYNAMIC IMAGE ENCODING/DECODING METHOD AND DEVICE**

(57)    More appropriate filtering is executed by determining whether a filter is to be applied to a luminance signal and a chrominance signal, individually.

A moving-picture decoding apparatus includes a decoding unit for decoding input coded data to generate a quantized transform coefficient and filter information, an inverse-transform/inverse-quantization unit for executing inverse-quantization and inverse-transform on the quantized transform coefficient to generate a prediction error picture, a decoded-picture generation unit for generating a decoded picture using the prediction error picture and a predicted picture, a luminance filter processing unit for applying a luminance filter to the luminance signal of the decoded picture based on luminance filter information to generate the luminance signal of a restored picture, and a chrominance filter processing unit for applying a chrominance filter to the chrominance signal of the decoded picture based on chrominance filter information to generate the chrominance signal of the restored picture.

F I G. 12

EP 2 299 720 A1

Printed by Jouve, 75001 PARIS (FR)

## Description

Technical Field

The present embodiment relates generally to a moving-picture encoding/decoding apparatus capable of enhancing the quality of a local decoded picture or a decoded picture using a filter.

Background Art

At the encoding side of a moving-picture encoding/decoding apparatus, orthogonal transform is executed, per pixel block, on a prediction error picture as the difference between an input moving picture and a prediction picture, and the transform coefficients acquired by the orthogonal transform are quantized for encoding. At the decoding side of the apparatus, the encoded moving picture is received, and processing inverse to the above-mentioned encoding is executed to acquire a moving picture.

There is a moving-picture encoding/decoding apparatus, in which filter information on a post filter is set at the encoding side, and is transmitted to the decoding side, where post filtering is executed using the received filter information (see, for example, S. Wittmann and T. Wedi, "Post-filter SEI message for 4:4:4 coding," JVT of ISO/IEC MPEG & ITU-T VCEG. JVT-SO30, April 2006 (Non-patent Document 1)).

In the moving-picture encoding/decoding disclosed in Non-patent Document 1, filter information is set at the encoding side to minimize the difference between a decoded picture and an input picture, thereby enhancing the quality of an output picture acquired at the decoding side using post filtering. Respective filter information items are set and transmitted for a luminance signal and a chrominance signal. However, it is not determined whether a filter should be applied to the individual signals.

Namely, although application of a filter to the luminance signal or the chrominance signal may involve a reduction in picture quality due to, for example, error rounding, the reduction cannot be avoided, and filter information for the luminance signal and that for the chrominance signal are always transmitted to the decoding side.

Disclosure of Invention

Object to Attain

As mentioned above, in the technique disclosed in Non-patent Document 1, although the execution of filtering on the luminance signal or the chrominance signal may involve a reduction in picture quality due to, for example, error rounding, the reduction cannot be avoided, and filter information for the luminance signal and that for the chrominance signal are always transmitted to the decoding side.

Moreover, the relationship between a picture quality improvement effect and an increase in the number of coded bits due to filter information transmission cannot be detected for the luminance signal or for the chrominance signal.

The present disclosure aims to provide a moving-picture encoding/decoding method and apparatus capable of switching an operation mode between a filter application mode and a filter non-application mode for a luminance signal and a chrominance signal, individually, thereby achieving optimal filtering.

Means for Attaining the Object

In accordance with a first aspect, there is provided a moving-picture encoding method comprising:

generating a prediction error picture based on a difference between an input moving picture and a predicted picture; executing transform and quantization on the prediction error picture to generate a quantized transform coefficient; generating luminance filter information including switch information which indicates whether a luminance filter is to be applied to a luminance signal of a local decoded picture corresponding to an already encoded picture included in the input moving picture; generating chrominance filter information including switch information which indicates whether a chrominance filter is to be applied to a chrominance signal of the local decoded picture corresponding to the already encoded picture included in the input moving picture; and encoding the quantized transform coefficient, and filter information including at least one of the luminance filter information and the chrominance filter information, to output coded data.

In accordance with a second aspect, there is provided a moving-picture encoding method comprising: decoding input coded data to generate a quantized transform coefficient and filter information; executing inverse-quantization and inverse-transform on the quantized transform coefficient to generate a prediction error picture; generating a decoded picture using the prediction error picture and a predicted picture; applying a luminance filter to a luminance signal of the decoded picture based on luminance filter information included in the filter information to generate a luminance signal of a restored picture; and applying a chrominance filter to a chrominance signal of the decoded picture based on chrominance filter information included in the filter information to generate a chrominance signal of the restored picture.

Advantage of the Invention

In the invention, it can be determined for a luminance signal and a chrominance signal, individually, whether application of a filter is executed. As a result, if it is considered that filtering of the luminance signal or chrominance signal may involve degradation of the quality of pictures, filtering can be individually stopped for the signals to prevent such degradation. Further, the filter coefficients of the filter may be set at the encoding side and transmitted. In this case, optimal filtering resulting from the consideration of both the picture quality improving effect and the increase in the number of coded bits can be realized to thereby enhance the coding efficiency.

Brief Description of Drawings

FIG. 1 is a block diagram illustrating the configuration of a moving-picture encoding apparatus according to an embodiment;
FIG. 2 is a block diagram illustrating the configuration of a filter information generating unit shown in FIG. 1;
FIG. 3 is a flowchart useful in explaining the operation of the filter information generating unit shown in FIG. 1;
FIG. 4 is a view illustrating a syntax structure employed in the embodiment;
FIG. 5 is a view illustrating loop filter data syntax employed in the embodiment;
FIG. 6 is a view illustrating loop filter data syntax (as an example in which filter size is fixed) employed in the embodiment;
FIG. 7 is a view illustrating loop filter data syntax (as an example of YUV 4:2:0 for acquiring chrominance size) employed in the embodiment;
FIG. 8 is a view illustrating loop filter data syntax (as an example in which filter coefficients are fixed) employed in the embodiment;
FIG. 9 is a view illustrating loop filter data syntax (as an example in which common chrominance filter coefficients are used) employed in the embodiment;
FIG. 10 is a view illustrating loop filter data syntax (as an example in which chrominance filter information is included only when luminance filter is applied) employed in the embodiment;
FIG. 11 is a block diagram illustrating the configuration of a moving-picture decoding apparatus corresponding to the encoding apparatus of FIG. 1;
FIG. 12 is a block diagram illustrating the configuration of a filter processing unit incorporated in the decoding apparatus of FIG. 11;
FIG. 13 is a flowchart useful in explaining the operation of the filter processing unit incorporated in the decoding apparatus of FIG. 11;
FIG. 14 is a block diagram illustrating a moving-picture encoding apparatus according to another embodiment;
FIG. 15 is a block diagram illustrating the configuration of a moving-picture decoding apparatus corresponding to the encoding apparatus of FIG. 14; and
FIG. 16 is a block diagram illustrating the configuration of a moving-picture decoding apparatus according to yet another embodiment.

Best Mode for Carrying Out the Invention Embodiments of the invention will be described with reference to the accompanying drawings.

(Moving-Picture Encoding Apparatus)

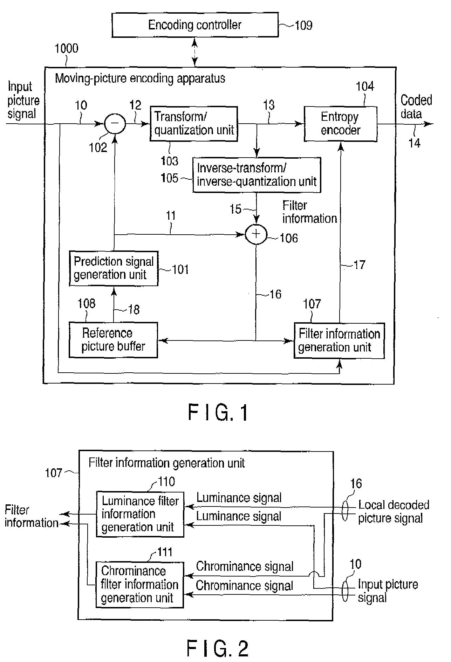

As shown in FIG. 1, a moving-picture encoding apparatus 1000 comprises a prediction signal generation unit 101, a subtractor (prediction error generation unit) 102, a transform/quantization unit 103, an entropy encoder 104, an inverse-transform/inverse-quantization unit 105, an adder 106, a filter information generation unit 107, and a reference picture buffer 108. The moving-picture encoding apparatus 1000 is controlled by an encoding controller 109.

The prediction signal generation unit 101 acquires an already encoded reference picture signal 18 from the reference picture buffer 108, performs preset prediction processing thereon, and outputs a prediction picture signal 11. The prediction processing can include motion prediction, temporal prediction based on motion compensation, spatial prediction based on already encoded pixels in a picture, and the like.

The subtractor 102 calculates the difference between an input picture signal 10 and a prediction picture signal 11, which correspond to a moving picture, thereby generating a prediction error picture signal 12. The prediction error picture signal 12 is input to the transform/quantization unit 103.

The transform/quantization unit 103 firstly executes transform processing on the prediction error picture signal 12. In this embodiment, orthogonal transform, such as discrete cosine transform (DCT), is executed to generate transform coefficients. Alternatively, wavelet transform or independent component analysis may be used to generate transform coefficients. The transform/quantization unit 103 then quantizes the generated transform coefficients using quantization parameters set in the encoding controller 109, described later, and outputs the quantized transform coefficients 13. The quantized transform coefficients 13 are input to the entropy encoder 104 and also to the inverse-transform/inverse-quantization unit 105.

The inverse-transform/inverse-quantization unit 105 executes inverse quantization on the quantized transform coefficients 13 using quantization parameters set in the encoding controller 109. The inverse-transform/inverse-quantization unit 105 then executes, on the inverse-quantized transform coefficients 13, inverse orthogonal transform, such as inverse discrete cosine transform (IDCT), which corresponds to the discrete cosine transform executed by the transform/quantization unit 103, thereby generating a prediction error picture signal 15.

The adder 106 adds up the prediction error picture signal 15 generated by the inverse-transform/inverse-quantization unit 105, and the prediction picture signal 11 generated by the prediction signal generation unit 101, thereby generating a local decoded picture signal 16.

The filter information generation unit 107 outputs filter information 17 based on the local decoded picture signal 16 and the input picture signal 10. The filter information generation unit 107 will be described later in detail.

The reference picture buffer 108 temporarily stores the local decoded picture signal 16 as the reference picture signal 18. The reference picture signal 18 stored in the reference picture buffer 108 is referred to when the prediction signal generation unit 101 generates the prediction picture signal 11.

The entropy encoder 104 executes entropy coding (e.g., Haffman coding or arithmetic coding) on various encoding parameters, such as the quantized transform coefficients 13, the filter information 17, prediction mode information, block size switch information, motion vectors and quantizing parameters, and outputs coded data 14.

The encoding controller 109 executes feedback control, quantization control and mode control related to the number of coded bits, thereby controlling the entire coding.

(Filter Information Generation Unit)

Referring now to FIG. 2, the filter information generation unit 107 will be described in detail. As shown in FIG. 2, the filter information generation unit 107 comprises a luminance filter information generation unit 110, and a chrominance filter information generation unit 111. The luminance filter information generation unit 110 acquires luminance signals from the local decoded picture signal 16 and the input picture signal 10, and generates luminance filter information. The chrominance filter information generation unit 111 acquires chrominance signals from the local decoded picture signal 16 and the input picture signal 10, and generates chrominance filter information.

In the embodiment, the luminance filter information and the chrominance filter information are switch information items used to determine whether a luminance signal and a chrominance signal should be filtered, respectively. When these information items instruct application of a filter, they contain filter coefficient information. The luminance filter information and the chrominance filter information are multiplexed and input as the filter information 17 to the entropy encoder 104.

A description will be given cf the outline of the processing of the moving-picture encoding apparatus 1000. A series of encoding processes described below are processes that are so-called hybrid encoding, include prediction processing and transform processing, and are generally executed in a moving picture encoding process.

Firstly, when the input picture signal 10 is input to the moving-picture encoding apparatus 1000, the prediction error generation unit (subtractor) 102 subtracts, from the input picture signal 10, the prediction picture signal 11 generated by the prediction signal generation unit 101, thereby generating the prediction error picture signal 12. The transform/quantization unit 103 executes transform and quantization processing on the prediction error picture signal 12, thereby generating the quantized transform coefficients 13. The quantized transform coefficients 13 are encoded by the entropy encoder 104.

The quantized transform coefficients 13 are also input to the inverse-transform/inverse-quantization unit 105, where they are subjected to inverse transform and inverse quantization to thereby generate the prediction error picture signal 15. The adder 106 adds up the prediction error picture signal 15 and the prediction picture signal 11 output from the prediction signal generation unit 101, thereby generating the local decoded picture signal 16.

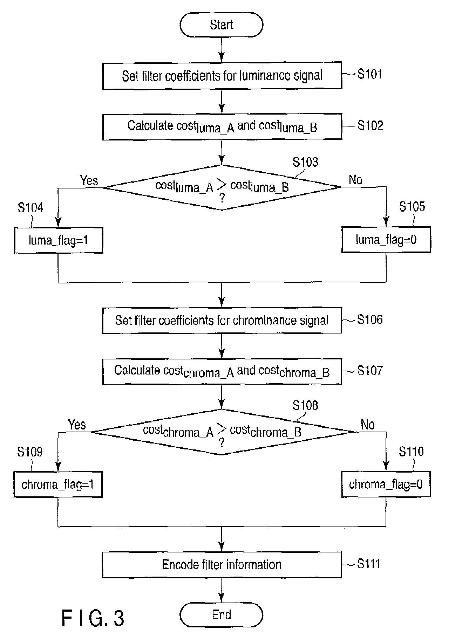

Referring then to FIGS. 2 and 3, a detailed description will be given of the operation of the filter information generation unit 107, which operation is unique to the moving-picture encoding apparatus 1000 of the embodiment.

In FIG. 2, when the local decoded picture signal 16 and the input picture signal 10 are input to the filter information generation unit 107, their luminance signals and chrominance signals are processed individually. The luminance signals are input to the luminance filter information generation unit 110, where filter coefficients are set, and switch information indicating whether a filter should be applied to the luminance signals is set.

In the embodiment, a two-dimensional Wiener filter generally used for picture restoration is employed, and the switch information is set based on the coding cost given by the following equation:

$$\text{cost} = D + \lambda \times R$$

where D is an error sum of sequence, and R is the number of coded bits. The coding cost enables a picture improvement effect to be compared with the number of coded bits for filter information transmission to thereby achieve optimal filtering.

FIG. 3 is a flowchart useful in explaining the operation of the filter information generation unit 107. As shown in FIG. 3, filter coefficients are set so that the error of mean square of a picture signal obtained by filtering the luminance signal of the local decoded picture signal 16, and the luminance signal of the input picture signal 10 becomes minimum (step S101).

Subsequently, $\text{cost}_{luma\_A}$ as a cost occurring when no filter is applied to the luminance signal, and $\text{cost}_{luma\_B}$ as a cost occurring when a filter is applied to the luminance signal are calculated (step S102).

After that, $cost_{luma\_A}$ is compared with $cost_{luma\_B}$ (step S103). If the application of the filter reduces the cost, i.e., if $cost_{luma\_A} > cost_{luma\_B}$, it is determined that the filter should be applied to the luminance signal at the decoding side, thereby setting, to 1, a flag luma_flag corresponding to the switch information (step S104).

In contrast, if the application of the filter does not reduce the cost, i.e., if $cost_{luma\_A} \leq Gost_{luma\_B}$, it is determined that the filter should not be applied to the luminance signal at the decoding side, thereby setting, to 0, the flag luma_flag corresponding to the switch information (step S105).

If luma_flag = 0, the luminance filter information comprises only luma_flag, whereas if luma_flag = 1, the luminance filter information comprises luma_flag and the filter coefficient information set in step S101.

In steps S106 to S110, the chrominance signal is processed. As mentioned above, the chrominance signal is input to the chrominance filter information generation unit 111, where filter coefficients are set, and switch information indicating whether a filter should be applied to the chrominance signals is set.

Specifically, filter coefficients are set so that the error of mean square of a picture obtained by filtering the chrominance signal of the local decoded picture signal 16, and the chrominance signal of the input picture signal 10 becomes minimum (step S106).

Subsequently, $cost_{chroma\_A}$ as a cost occurring when no filter is applied to the chrominance signal, and $cost_{chroma\_B}$ as a cost occurring when a filter is applied to the chrominance signal are calculated (step S107).

After that, $cost_{chroma\_A}$ is compared with $cost_{chroma\_B}$ (step S10B). If the application of the filter reduces the cost, i.e., if $cost_{chroma\_A} > cost_{chroma\_B}$, it is determined that the filter should be applied to the chrominance signal at the decoding side, thereby setting, to 1, a flag chroma_flag corresponding to the switch information (step S109).

In contrast, if the application of the filter does not reduce the cost, i.e., if $cost_{chroma\_A} \leq cost_{chroma\_B}$, it is determined that the filter should not be applied to the chrominance signal at the decoding side, thereby setting, to 0, the flag chroma_flag corresponding to the switch information (step S110).

If chroma_flag = 0, the luminance filter information comprises only chroma_flag, whereas if chroma_flag = 1, the chrominance filter information comprises chroma_flag and the filter coefficient information set in step S106.

Note that when the picture signal to process comprises Y (luminance signal), and a plurality of chrominance signal components, such as Cb (chrominance signal) and Cr (chrominance signal), it is assumed that the chrominance filter information is generated for at least one of the chrominance signal components. Alternatively, common chrominance filter information may be generated for the plurality of chrominance signal components.

Lastly, the filter information 17 generated by the filter information generation unit 107 is encoded in the entropy coding unit 104, multiplexed into a bit stream along with the quantized transform coefficients 13, prediction mode information, block-size switch information, motion vectors, quantization parameters, etc., and output to a moving-picture decoding apparatus 2000, described later (step S111).

(Syntax Structure)

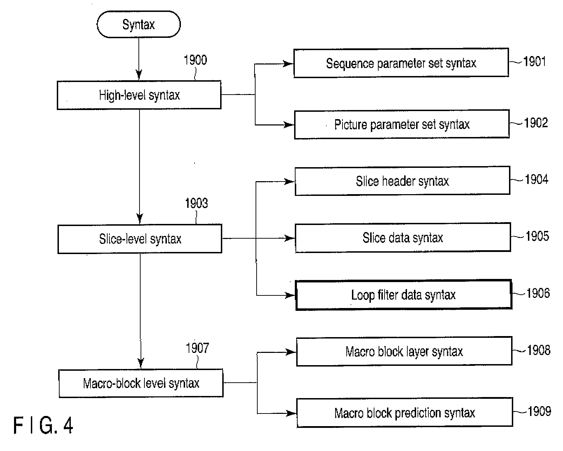

Referring now to FIG. 4, a description will be given of the outline of a syntax structure employed in the embodiment and associated with the method of encoding the filter information 17. In the example below, it is assumed that the filter information 17 is transmitted per slice.

The syntax structure mainly comprises three parts, i.e., high-level syntax 1900, slice-level syntax 1903 and macro-block level syntax 1907. The high-level syntax 1900 contains syntax information of higher layers not lower than slice. The slice-level syntax 1903 specifies information for each slice. The macro-block level syntax 1907 specifies transform coefficient data, prediction mode information, motion vectors, etc., necessary for each macro block.

The high-level syntax 1900, slice-level syntax 1903 and macro-block level syntax 1907 each comprise more detailed syntax components. The high-level syntax 1900 comprises picture-level syntax components, such as sequence parameter set syntax 1901 and picture parameter set syntax 1902. The slice-level syntax 1903 comprises slice header syntax 1904, slice data syntax 1905, loop filter data syntax 1906, etc. The macro-block level syntax 1907 comprises macro block layer syntax 1908, macro block prediction syntax 1909, etc.

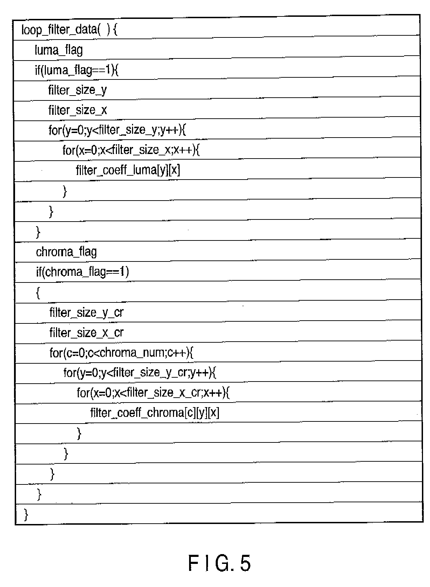

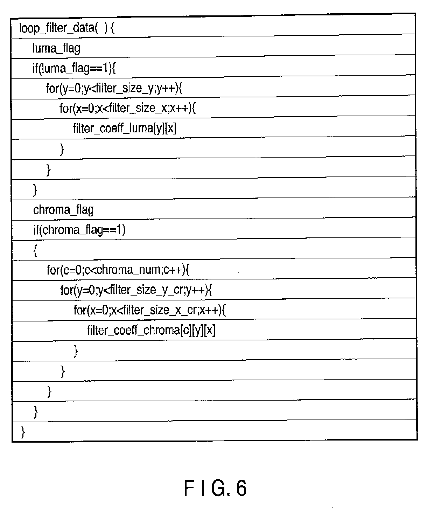

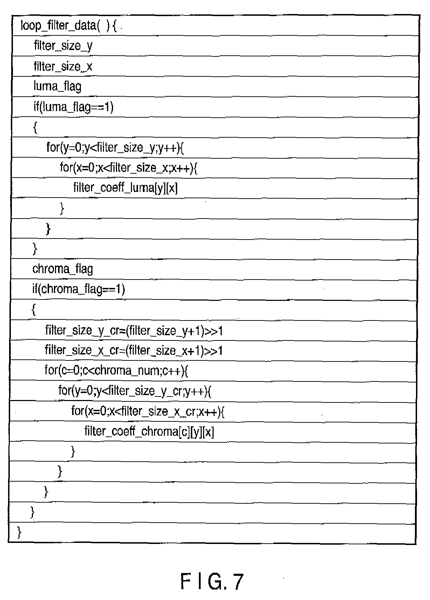

As shown in FIG. 5, the loop filter data syntax 1906 specifies the filter information 17 as a parameter associated with a loop filter employed in the embodiment. In FIG. 5, luma_flag, as the filter information 17, is switch information indicating whether a filter is applied to a luminance signal, as mentioned above. filter_coeff_luma [y][x] indicates two-dimensional filter coefficients, and filter_size_y and filter_sizo_x indicate values for determining a filter size for the luminance signal. Further, chroma_flag indicates switch information indicating whether a filter is to be applied to the chrominance signal, and chroma_num indicates the number of components included in the chrominance signal. chroma_flag may be given of each component of the chrominance signal. filter_coeff_chroma[c][y][x] indicates two-dimensional filter coefficients for the $c^{th}$ chrominance signal component. filter_size_y_cr and filter_size_x_cr indicate values for determining a filter size for the chrominance signal. Alternatively, the luminance filter and the chrominance filter may be a one-dimensional filter. Further, although in the embodiment, values indicating the filter size are specified in a syntax component, preset fixed values may be used instead of specifying them in the syntax component. In this case, the syntax of FIG. 5 is changed to that shown in, for example, FIG. 6. It should be noted that if the filter size is fixed, the same values must be used in the moving-picture encoding apparatus 1000, and a moving-picture decoding apparatus 2000 described later. The tap length of a filter for the chrominance signal may be determined based on properties, such as the tap length of a filter for the luminance signal, the resolutions of the chrominance signal, and the dynamic range. For instance, when a picture, in which resolutions set for the chrominance signal, such as YUV 4:2:2 or YUV 4:2:0, are lower than those for the luminance signal, is processed, a filter of a tap length smaller than in the case of the luminance signal may be used for the chrominance signal. FIG. 7 shows a syntax that can be contrived for YUV 4:2:0. In this case, since both horizontal and vertical resolutions of the chrominance signal are each one-half the corresponding resolution of the luminance signal, the tap length of the filter for the chrominance signal is set to one-half that for the luminance signal.

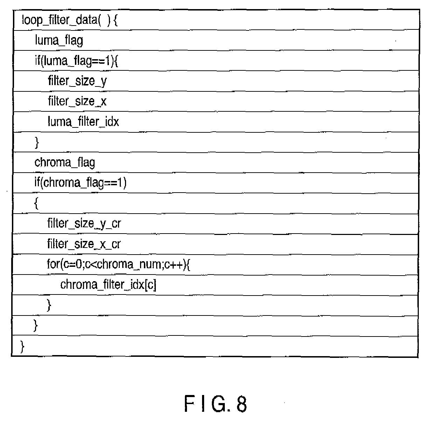

Further, fixed values may be used as the filter coefficients. When a fixed filter is used, it may be selected from a plurality of filters. In this case, index information for specifying the filter may be added. Also in this case, the syntax of FIG. 5 is changed to that shown in FIG. 8. In FIG. 8, luma_filter_idx and chroma_filter_idx[c] indicate the index information for specifying the filter.

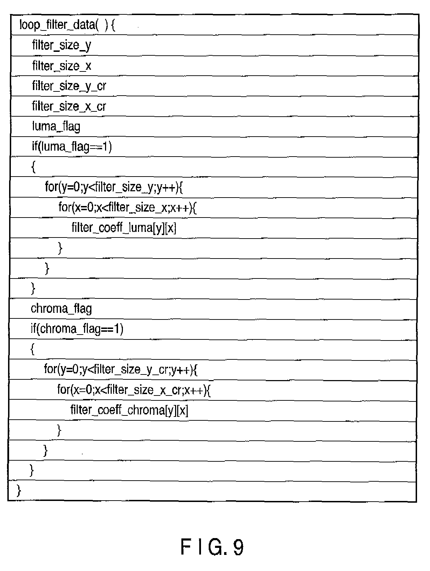

Further, as mentioned above, the same filter information may be used for a plurality of chrominance signal components. FIG. 9 shows an example of syntax in which the same filter coefficients are shared between all chrominance signal components.

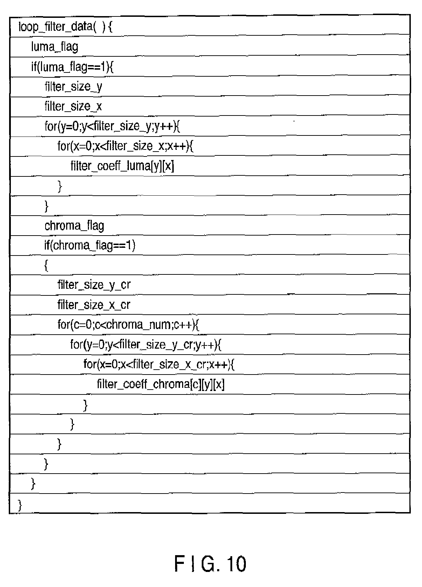

Further, although in the embodiment, chrominance filter information is necessarily attached, it may be attached only when a filter is applied to the luminance signal, i.e., only when luma_flag as switch information contained in the luminance filter information is 1. In this case, the loop filter data syntax is changed from that of FIG. 5 to, for example, that of FIG. 10.

In addition, although in the embodiment, application and non-application of a filter are switched per slice, and the filter information 17 is transmitted per slice, this structure may be modified such that application and non-application of a filter are switched per sequence, per picture or per macro-block, and the filter information is set and transmitted per sequence, per picture or per macro-block.

Alternatively, application and non-application of a filter may be switched in each area into which the luminance signal is divided in accordance with preset area division information. Yet alternatively, different filters may be used in different areas. In this case, area division information and switch information for each area are added to luminance filter information. Also in this case, the same area division information may be used for the chrominance filter, and application and non-application of a filter may be switched in each area. Alternatively, different filters may be used in different areas. As the area division information, the block size may be used when the screen is divided per block. Further, when area division is performed by picture processing, the average value of absolute differences between a target pixel and peripheral pixels, the maximum absolute difference therebetween, an absolute value obtained after high-pass filter processing, and/or a threshold value for, for example, an absolute value in a change in pixel value due to filter processing, may be used as the area division information. The processing based on the area division may be executed by the moving picture decoding apparatus, described later.

(Moving Picture Decoding Apparatus)

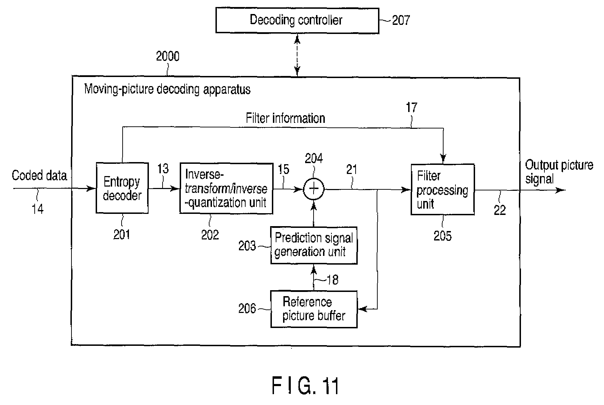

A moving-picture decoding apparatus 2000 corresponding to the moving-picture encoding apparatus 1000 shown in FIG. 1 will now be described. As shown in FIG. 11, the moving-picture decoding apparatus 2000 comprises an entropy decoder 201, an inverse-transform/inverse-quantization unit 202, a prediction signal generation unit 203, an adder 204, a filter processing unit 205, and a reference picture buffer 206. The moving-picture encoding apparatus 1000 is controlled by a decoding controller 207.

The entropy decoder 201 decodes each syntax code sequence (i.e., the high-level syntax, the slice-level syntax, the macro-block level syntax included in the syntax structure of FIG. 4) of sequential coded data 14, thereby decoding the quantized transform coefficients 13 and the filter information 17.

The inverse-transform/inverse-quantization unit 202 acquires the quantized transform coefficients 13 to execute inverse-quantization and inverse orthogonal transform (e.g., inverse discrete cosine transform) on the same, and outputs a prediction error picture signal 15. In this case, inverse transform and inverse quantization corresponding to the orthogonal transform and quantization executed in the moving-picture encoding apparatus 1000. For instance, if the transform/quantization unit 103 of the moving-picture encoding apparatus 1000 executes wavelet transform and quantization, the inverse-transform/inverse-quantization unit 202 executes corresponding inverse wavelet transform and inverse quantization.

The prediction signal generation unit 203 acquires an already decoded reference picture signal 18 from the reference picture buffer 206, executes preset prediction processing thereon, and outputs a prediction picture signal 11. The prediction processing can include temporal prediction based on motion compensation, spatial prediction based on already decoded pixels in a picture, or the like. However, it should be noted that the same prediction processing as in the moving-picture encoding apparatus 1000 is executed.

The adder 204 adds up the acquired prediction error picture signal 15 and prediction picture signal 11, thereby generating a decoded picture signal 21.

The filter processing unit 205 acquires the decoded picture signal 21 and the filter information 17, and outputs a restored picture signal 22. The filter processing unit 205 will be described later in detail.

The reference picture buffer 206 temporarily stores, as a reference picture signal 18, the restored picture signal 22 acquired from the filter processing unit 205. The reference picture signal 18 stored in the reference picture buffer 206 is referred to when the prediction signal generation unit 203 generates the prediction picture signal 11.

The decoding controller 207 executes, for example, decode timing control, thereby controlling the entire decoding.

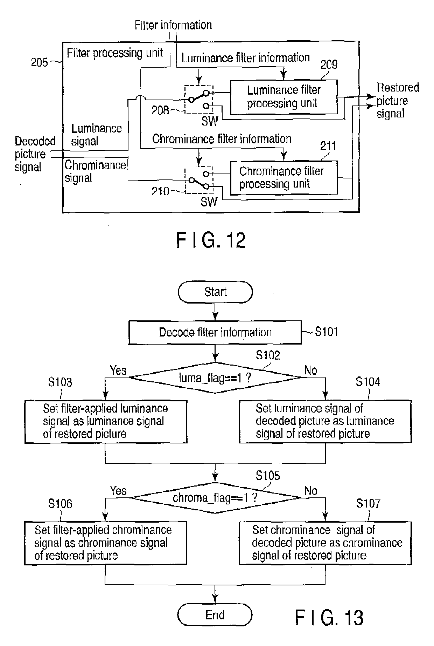

The filter processing unit 205 incorporated in the moving-picture decoding apparatus 2000 of the embodiment will be described in detail. As shown in FIG. 12, the filter processing unit 205 comprises a luminance filter switch 208, a luminance filter processing unit 209, a chrominance filter switch 210 and a chrominance filter processing unit 211.

The luminance filter processing unit 209 acquires a luminance signal from the decoded picture signal 21, and luminance filter information from the filter information 17, and applies a filter to the luminance signal. The chrominance filter processing unit 211 acquires a chrominance signal from the decoded picture signal 21, and chrominance filter information from the filter information 17, and applies a filter to the chrominance signal.

The luminance filter switch 208 switches application/non-application of a filter to a luminance signal based on the luminance filter information, to thereby determine the luminance signal for the restored picture signal 22. The chrominance filter switch 210 switches application/non-application of a filter to a chrominance signal based on the chrominance filter information, to thereby determine the chrominance signal for the restored picture signal 22. The restored picture signal 22 is output as an output picture signal at the timing managed by the decoding controller 207.

A simple description will be given of the processing of the moving-picture decoding apparatus 2000. A series of decoding processes described below is a general decoding process, so-called hybrid coding, incorporated in moving-picture coding.

Firstly, when coded data 14 is input to the moving-picture decoding apparatus 2000 shown in FIG. 11, the entropy decoding unit 201 decodes, from the input data, prediction mode information, block size switch information, motion vectors, quantization parameters, as well as the transform coefficient 13 and the filter information 17, in accordance with the syntax structure of FIG. 4. Subsequently, the transform coefficients 13 decoded by the entropy decoding unit 201 are input to the inverse-transform/inverse-quantization unit 202, where they are subjected to inverse quantization based on quantization parameters set in the decoding controller 207, and the resultant transform coefficients 13 are subjected to inverse orthogonal transform (e.g., inverse discrete cosine transform), thereby restoring the prediction error picture signal 15. The prediction error picture signal 15 is added by the adder 203 to the prediction picture signal 11 output from the prediction signal generation unit 203, whereby the decoded picture signal 21 is generated.

Referring then to FIGS. 12 and 13, a detailed description will be given of the operation of the filter processing unit 205, which is unique to the moving-picture decoding apparatus 2000 of the embodiment.

Firstly, the entropy decoding unit 201 executes entropy decoding of the filter information 17 in accordance with the syntax structure of FIG. 4 (step S101). As shown in FIG. 5, the filter information 17 as a parameter associated with the loop filter of the embodiment is written in the loop filter data syntax 1906 belonging to the slice-level syntax 1903 in the syntax structure of FIG. 4.

The luminance filter information included in the filter information 17 is input to the luminance filter switch 208. At this time, if luma_flag indicating the filter switch information for the luminance signal is 0, no filter is applied to the luminance signal and the luminance signal of the decoded picture signal 21 is used as that of the restored picture signal 22. In contrast, if luma_flag is 1, the luminance filter processing unit 209 applies a filter to the luminance signal based on the luminance filter information to thereby generate a luminance signal for the restored picture signal 22 (steps S103 to S106).

The chrominance filter information included in the filter information 17 is input to the chrominance filter switch 210. At this time, if chroma_flag indicating the filter switch information for the chrominance signal is 0, no filter is applied to the chrominance signal and the chrominance signal of the decoded picture signal 21 is used as that of the restored picture signal 22. In contrast, if chroma_flag is 1, the chrominance filter processing unit 209 applies a filter to the chrominance signal based on the chrominance filter information to thereby generate a chrominance signal for the restored picture signal 22 (steps S105 to S107).

The restored picture signal 22 is output as an output picture signal.

As described above, in the moving-picture encoding apparatus of the embodiment, the filter information is set so that the difference between the input picture and the prediction picture, and the quality of the output picture can be enhanced, with such filter adaptive application enabled. Namely, the use of switch information for determining whether a filter should be applied to the luminance signal and the chrominance signal, individually, enables optimal filtering for the luminance signal and the chrominance signal.

In the moving-picture encoding apparatus 1000 and the moving-picture decoding apparatus 2000 of the embodiment, filtering is executed on the local decoded picture signal 16. However, the local decoded picture signal 16 may be formed of a picture signal obtained by conventional de-blocking filtering.

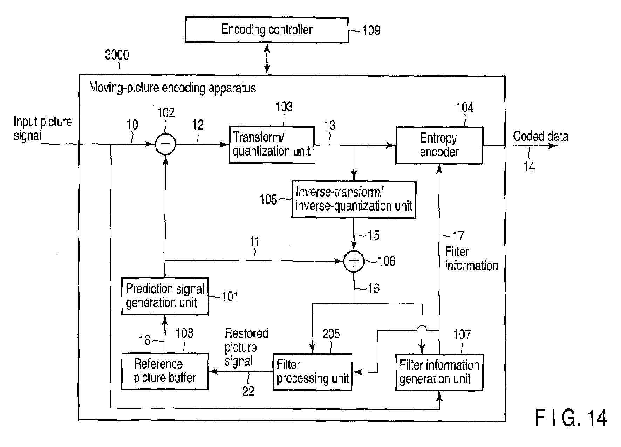

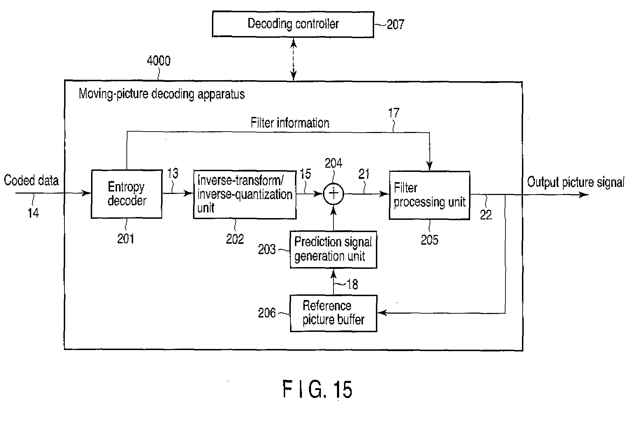

Further, in the above description the processing according to the embodiment is realized as post filtering in the moving-picture encoding apparatus 1000 and the moving-picture decoding apparatus 2000. The embodiment may be modified such that the processing may be applied as loop filtering, and the restored picture signal 22 obtained after filtering be used as a reference picture signal. In this embodiment, the moving-picture encoding apparatus 1000 of FIG. 1 is replaced with a moving-picture encoding apparatus 3000 shown in FIG. 14, and the moving-picture decoding apparatus 2000 of FIG. 11 is replaced with a moving-picture decoding apparatus 4000 shown in FIG. 15.

The moving-picture encoding apparatus 3000 is realized by adding the filter processing unit 205 to the moving-picture encoding apparatus 1000, and changing the input to the reference picture buffer 108 from the local decoded picture signal 16 output from the adder 204, to the restored picture signal 22 output from the filter processing unit 205.

Similarly, the moving-picture decoding apparatus 4000 is realized by changing the input to the reference picture buffer 206 from the decoded picture signal 21 output from the adder 204, to the restored picture signal 22 output from the filter processing unit 205.

The above-mentioned use of a filter-applied picture as a reference picture enables subsequent prediction to be executed at high accuracy, thereby enhancing the efficiency of coding.

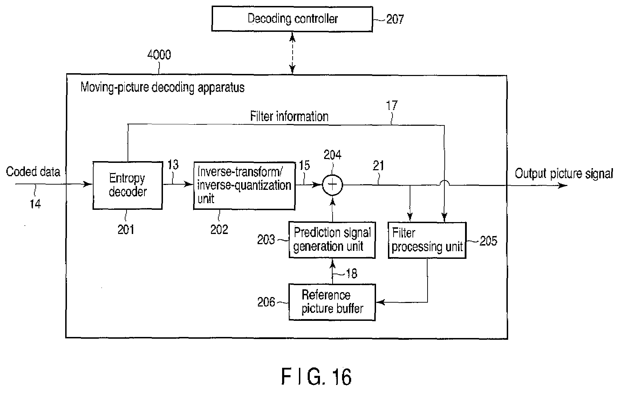

In yet another embodiment, the restored picture signal 22 obtained by the filter processing of the invention may be used only as a reference picture signal, and the standard decoded picture signal 21 be used as the output picture signal. In this case, the moving-picture encoding apparatus 3000 may be used, while the moving-picture decoding apparatus is changed to a moving-picture decoding apparatus 5000 shown in FIG. 16.

The moving-picture decoding apparatus 5000 of FIG. 16 is realized by changing the output picture signal of the moving-picture decoding apparatus 4000 of FIG. 15 from the restored picture signal 22 to the local decoded picture signal 21.

The moving-picture encoding apparatus 1000, moving-picture decoding apparatus 2000, moving-picture encoding apparatus 3000, moving-picture decoding apparatus 4000 and moving-picture decoding apparatus 5000 can also be realized by using, for example, a versatile computer system as basic hardware. Namely, the prediction signal generation unit 101, subtractor 102, transform/quantization unit 103, entropy encoder 104, inverse-transform/inverse-quantization unit 105, adder 106, filter information generation unit 107, reference picture buffer 108, encoding controller 109, luminance filter information generation unit 110, chrominance filter information generation unit 111, entropy decoder 201, inverse-transform/inverse-quantization unit 202, prediction signal generation unit 203, adder 204, filter processing unit 205, reference picture buffer 206, decoding controller 207, luminance filter switch 208, luminance filter processing unit 209, chrominance filter switch 210 and chrominance filter processing unit 211 can be realized by causing a processor incorporated in the above-mentioned computer system to execute programs.

Further, the moving-picture encoding apparatus 1000, moving-picture decoding apparatus 2000, moving-picture encoding apparatus 3000, moving-picture decoding apparatus 4000 and moving-picture decoding apparatus 5000 may be realized by beforehand installing the above-mentioned programs into the computer system, or by storing them on a recording medium such as a CD-ROM, or by downloading them via a network and installing them in the computer system. Furthermore, the reference picture buffers 108 and 206 can be realized using a memory incorporated in the computer system or externally attached thereto, a hard disk, or a storage medium such as a CD-R, CD-RW, DVD-RAM or DVD-R.

The present invention is not limited to the above-described embodiments, but may be modified in various ways without departing from the scope. Various inventions can be realized by appropriately combining the structural elements disclosed in the embodiments. For instance, some of the disclosed structural elements may be deleted. Some structural elements of different embodiments may be combined appropriately.

**Claims**

1. A moving-picture encoding apparatus **characterized by** comprising:

   a prediction error generation unit configured to generate a prediction error picture based on a difference between an input moving picture and a predicted picture;
   a transform/quantization unit configured to execute transform and quantization on the prediction error picture to generate a quantized transform coefficient;
   a luminance filter information generation unit configured to generate luminance filter information including switch information which indicates whether a luminance filter is to be applied to a luminance signal of a local decoded picture corresponding to an already encoded picture included in the input moving picture;
   a chrominance filter information generation unit configured to generate chrominance filter information including switch information which indicates whether a chrominance filter is to be applied to a chrominance signal of the local decoded picture corresponding to the already encoded picture included in the input moving picture; and
   an encoding unit configured to encode the quantized transform coefficient, and filter information including at least one of the luminance filter information and the chrominance filter information, to output coded data.

2.  The apparatus according to claim 1, **characterized by** further comprising:

    a luminance filter processing unit configured to apply the luminance filter to the luminance signal of the local decoded picture, based on the luminance filter information, to generate a luminance signal of a restored picture;
    a chrominance filter processing unit configured to apply the chrominance filter to the chrominance signal of the local decoded picture, based on the chrominance filter information, to generate a chrominance signal of the restored picture; and
    a prediction picture generation unit configured to generate the predicted picture using the restored picture as a reference picture.

3.  The apparatus according to claim 1, **characterized in that** the filter information further includes filter coefficient information, and further comprising a filter information generation unit configured to set, as the filter coefficient information, filter coefficients for a luminance signal and a chrominance signal of a decoded picture at a decoding side.

4.  The apparatus according to claim 1, **characterized in that** the chrominance filter information is included in the filter information only when the luminance filter is applied.

5.  The apparatus according to claim 1, **characterized in that** the chrominance filter has a tap length not more than a tap length of the luminance filter.

6.  The apparatus according to claim 1, **characterized in that** the chrominance filter has a tap length varied in accordance with a property of a chrominance signal of a moving picture as an encoding target, the property including a resolution and a dynamic range.

7.  The apparatus according to claim 1, **characterized in that** the chrominance filter information is shared between a plurality of chrominance signal components.

8.  The apparatus according to claim 2, **characterized in that**
    the luminance filter processing unit divides the luminance signal into divisional areas based on preset area dividing information, and determines whether the luminance filter is applied to each of the divisional areas, or applies different luminance filters to the divisional areas; and
the chrominance filter processing unit divides the chrominance signal into divisional areas corresponding to the divisional areas of the luminance signal, based on the preset area dividing information, and determines whether the chrominance filter is applied to each of the divisional areas of the chrominance signal, or applies different chrominance filters to the divisional areas of the chrominance signal.

9.  A moving-picture encoding method **characterized by** comprising:

    generating a prediction error picture based on a difference between an input moving picture and a predicted picture;
    executing transform and quantization on the prediction error picture to generate a quantized transform coefficient;
    generating luminance filter information including switch information which indicates whether a luminance filter is to be applied to a luminance signal of a local decoded picture corresponding to an already encoded picture included in the input moving picture;
    generating chrominance filter information including switch information which indicates whether a chrominance filter is to be applied to a chrominance signal of the local decoded picture corresponding to the already encoded picture included in the input moving picture; and
    encoding the quantized transform coefficient, and filter information including at least one of the luminance filter information and the chrominance filter information, to output coded data.

10. A moving-picture decoding apparatus **characterized by** comprising:

    a decoding unit configured to decode input coded data to generate a quantized transform coefficient and filter information;
    an inverse-transform/inverse-quantization unit configured to execute inverse-quantization and inverse-transform on the quantized transform coefficient to generate a prediction error picture;
    a decoded-picture generation unit configured to generate a decoded picture using the prediction error picture and a predicted picture;
    a luminance filter processing unit configured to apply a luminance filter to a luminance signal of the decoded picture based on luminance filter information included in the filter information to generate a luminance signal of a restored picture; and
    a chrominance filter processing unit configured to apply a chrominance filter to a chrominance signal of the decoded picture based on chrominance filter information included in the filter information to generate a chrominance signal of the restored picture.

11. The apparatus according to claim 10, **characterized by** further comprising an output unit configured to output the restored picture as an output picture.

12. The apparatus according to claim 10, **characterized in that** the restored picture is used as a reference picture to generate the predicted picture.

13. The apparatus according to claim 10, **characterized in that** the filter information further includes filter coefficient information.

14. The apparatus according to claim 10, **characterized in that** the chrominance filter information is included in the filter information only when the luminance filter is applied.

15. The apparatus according to claim 10, **characterized in that** the chrominance filter has a tap length not more than a tap length of the luminance filter.

16. The apparatus according to claim 10, **characterized in that** the chrominance filter has a tap length varied in accordance with a property of a chrominance signal of a moving picture as an encoding target, the property including a resolution and a dynamic range.

17. The apparatus according to claim 10, **characterized in that** the chrominance filter information is shared between a plurality of chrominance signal components.

18. The apparatus according to claim 10, **characterized in that**
the luminance filter processing unit divides the luminance signal into divisional areas based on preset area dividing information, and determines whether the luminance filter is applied to each of the divisional areas, or applies different luminance filters to the divisional areas; and
the chrominance filter processing unit divides the chrominance signal into divisional areas corresponding to the divisional areas of the luminance signal, based on the preset area dividing information, and determines whether the chrominance filter is applied to each of the divisional areas of the chrominance signal, or applies different chrominance filters to the divisional areas of the chrominance signal.

19. A moving-picture decoding method **characterized by** comprising:

decoding input coded data to generate a quantized transform coefficient and filter information;

executing inverse-quantization and inverse-transform on the quantized transform coefficient to generate a prediction error picture;
generating a decoded picture using the prediction error picture and a predicted picture;
applying a luminance filter to a luminance signal of the decoded picture based on luminance filter information included in the filter information to generate a luminance signal of a restored picture; and
applying a chrominance filter to a chrominance signal of the decoded picture based on chrominance filter information included in the filter information to generate a chrominance signal of the restored picture.

Encoding controller ~109

1000

Moving-picture encoding apparatus

Input
picture
signal

10   12   Transform/
quantization unit

102

104

Entropy
encoder

13

Coded
data

14

103
105 ~ Inverse-transform/
inverse-quantization unit

11

15 ~ Filter
information

+ ~106

17

Prediction signal
generation unit ~101

16

108   ~18

107

Reference
picture buffer

Filter information
generation unit

F I G. 1

Filter information generation unit

107 ~

110

Luminance filter
information
generation unit

Luminance signal

Luminance signal

16

Local decoded
picture signal

Filter
information

111

Chrominance
filter information
generation unit

Chrominance signal

Chrominance signal

10

Input picture
signal

F I G. 2

11

Start

Set filter coefficients for luminance signal —— S101

Calculate $cost_{luma\_A}$ and $cost_{luma\_B}$ —— S102

S103

$cost_{luma\_A} > cost_{luma\_B}$ ?

Yes                                    No

S104                                   S105

luma_flag=1                            luma_flag=0

Set filter coefficients for chrominance signal —— S106

Calculate $cost_{chroma\_A}$ and $cost_{chroma\_B}$ —— S107

S108

$cost_{chroma\_A} > cost_{chroma\_B}$ ?

Yes                                    No

S109                                   S110

chroma_flag=1                          chroma_flag=0

Encode filter information —— S111

FIG. 3                    End

```
                    ┌──────────┐
                    │  Syntax  │
                    └────┬─────┘
                         │                              ┌──────────────────────────────────┐
                         │              1900            │   Sequence parameter set syntax    │─1901
                         ▼           ┌─────────────────►└──────────────────────────────────┘
                  ┌────────────────┐ │
                  │High-level syntax├─┤              ┌──────────────────────────────────┐
                  └────────┬───────┘ └─────────────►│    Picture parameter set syntax    │─1902
                           │                         └──────────────────────────────────┘
                           │
                           │                              ┌──────────────────────────────────┐
                           │              ┌──────────────►│         Slice header syntax        │─1904
                           │              │               └──────────────────────────────────┘
                           │  1903        │
                           ▼              │            ┌──────────────────────────────────┐
                  ┌────────────────┐      ├───────────►│          Slice data syntax         │─1905
                  │Slice-level syntax├────┤            └──────────────────────────────────┘
                  └────────┬───────┘      │
                           │              │            ┌──────────────────────────────────┐
                           │              └───────────►│         Loop filter data syntax     │─1906
                           │                           └──────────────────────────────────┘
                           │
                           │  1907                        ┌──────────────────────────────────┐
                           ▼              ┌──────────────►│        Macro block layer syntax     │─1908
                  ┌────────────────────┐  │              └──────────────────────────────────┘
                  │Macro-block level syntax├┤
                  └────────────────────┘  │            ┌──────────────────────────────────┐
                                          └───────────►│     Macro block prediction syntax   │─1909
                                                        └──────────────────────────────────┘
```

F I G. 4

```
loop_filter_data( ) {
  luma_flag
  if(luma_flag==1){
    filter_size_y
    filter_size_x
    for(y=0;y<filter_size_y;y++){
      for(x=0;x<filter_size_x;x++){
        filter_coeff_luma[y][x]
      }
    }
  }
  chroma_flag
  if(chroma_flag==1)
  {
    filter_size_y_cr
    filter_size_x_cr
    for(c=0;c<chroma_num;c++){
      for(y=0;y<filter_size_y_cr;y++){
        for(x=0;x<filter_size_x_cr;x++){
          filter_coeff_chroma[c][y][x]
        }
      }
    }
  }
}
```

F I G. 5

```
loop_filter_data( ) {
    luma_flag
    if(luma_flag==1){
        for(y=0;y<filter_size_y;y++){
            for(x=0;x<filter_size_x;x++){
                filter_coeff_luma[y][x]
            }
        }
    }
    chroma_flag
    if(chroma_flag==1)
    {
        for(c=0;c<chroma_num;c++){
            for(y=0;y<filter_size_y_cr;y++){
                for(x=0;x<filter_size_x_cr;x++){
                    filter_coeff_chroma[c][y][x]
                }
            }
        }
    }
}
```

FIG. 6

```
loop_filter_data( ){ .
    filter_size_y
    filter_size_x
    luma_flag
    if(luma_flag==1)
    {
        for(y=0;y<filter_size_y;y++){
            for(x=0;x<filter_size_x;x++){
                filter_coeff_luma[y][x]
            }
        }
    }
    chroma_flag
    if(chroma_flag==1)
    {
        filter_size_y_cr=(filter_size_y+1)>>1
        filter_size_x_cr=(filter_size_x+1)>>1
        for(c=0;c<chroma_num;c++){
            for(y=0;y<filter_size_y_cr;y++){
                for(x=0;x<filter_size_x_cr;x++){
                    filter_coeff_chroma[c][y][x]
                }
            }
        }
    }
}
```

# FIG. 7

```
loop_filter_data( ) {
    luma_flag
    if(luma_flag==1){
        filter_size_y
        filter_size_x
        luma_filter_idx
    }
    chroma_flag
    if(chroma_flag==1)
    {
        filter_size_y_cr
        filter_size_x_cr
        for(c=0;c<chroma_num;c++){
            chroma_filter_idx[c]
        }
    }
}
```

F I G. 8

```
loop_filter_data( ) {
    filter_size_y
    filter_size_x
    filter_size_y_cr
    filter_size_x_cr
    luma_flag
    if(luma_flag==1)
    {
        for(y=0;y<filter_size_y;y++){
            for(x=0;x<filter_size_x;x++){
                filter_coeff_luma[y][x]
            }
        }
    }
    chroma_flag
    if(chroma_flag==1)
    {
        for(y=0;y<filter_size_y_cr;y++){
            for(x=0;x<filter_size_x_cr;x++){
                filter_coeff_chroma[y][x]
            }
        }
    }
}
```

F I G. 9

```
loop_filter_data( ) {
    luma_flag
    if(luma_flag==1){
        filter_size_y
        filter_size_x
        for(y=0;y<filter_size_y;y++){
            for(x=0;x<filter_size_x;x++){
                filter_coeff_luma[y][x]
            }
        }
    chroma_flag
    if(chroma_flag==1)
    {
        filter_size_y_cr
        filter_size_x_cr
        for(c=0;c<chroma_num;c++){
            for(y=0;y<filter_size_y_cr;y++){
                for(x=0;x<filter_size_x_cr;x++){
                    filter_coeff_chroma[c][y][x]
                }
            }
        }
    }
}
```

F I G. 10

F I G. 11

Filter information

Filter processing unit | Luminance filter information | 209

205 ~

Luminance filter
processing unit

Restored
picture
signal

208 ~

SW

Luminance
signal

Decoded
picture
signal

Chrominance filter information | 211

Chrominance
signal

Chrominance filter
processing unit

210 ~

SW

F I G. 12

Start

Decode filter information ~ S101

S102

Yes ⟵ luma_flag==1 ? ⟶ No

S103

S104

Set filter-applied luminance
signal as luminance signal
of restored picture

Set luminance signal of
decoded picture as luminance
signal of restored picture

S105

Yes ⟵ chroma_flag==1 ? ⟶ No

S106

S107

Set filter-applied chrominance
signal as chrominance signal
of restored picture

Set chrominance signal of
decoded picture as chrominance
signal of restored picture

End          F I G. 13

Encoding controller ~109

3000

Moving-picture encoding apparatus

Input picture signal → 10 → 102 (−) → 12 → Transform/quantization unit (103) → 13 → Entropy encoder (104) → Coded data 14

Inverse-transform/inverse-quantization unit (105)

15

11 → (+) ~106

16

Prediction signal generation unit ~101

17 Filter information

18~ 108 Reference picture buffer

Restored picture signal 22

205 Filter processing unit

107 Filter information generation unit

F I G. 14

Decoding controller ~207

4000

Moving-picture decoding apparatus

Filter information                                    17

Coded data →                                    204    21
14              Entropy    13   Inverse-transform/    15    ⊕ →   Filter          → Output picture signal
                decoder         inverse-quantization                processing unit                22
                                unit
                201             202          203 ~ Prediction signal   205
                                                    generation unit
                                                    ~18
                                            206 ~ Reference
                                                    picture buffer

F I G. 15

F I G. 16

EP 2 299 720 A1

## INTERNATIONAL SEARCH REPORT

| | International application No. |
|---|---|
| | PCT/JP2009/062216 |

A. CLASSIFICATION OF SUBJECT MATTER
H04N7/32(2006.01)i, H04N7/30(2006.01)i, H04N11/04(2006.01)i

According to International Patent Classification (IPC) or to both national classification and IPC

B. FIELDS SEARCHED

Minimum documentation searched (classification system followed by classification symbols)
H04N7/32, H04N7/30, H04N11/04

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho    1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/111292 A1 (Matsushita Electric Industrial Co., Ltd.), 04 October, 2007 (04.10.07), Par. Nos. [0061] to [0080], [0114] to [0116], [0143] to [0144], [0201], [0211] to [0214] & EP 1841230 A1          & KR 10-2009-0003272 A & CN 101411201 A | 1-19 |
| Y | WO 2007/094329 A1 (NEC Corp.), 23 August, 2007 (23.08.07), Column 20, line 16 to column 22, line 13 (Family: none) | 1-19 |
| Y | JP 2005-20771 A (Toshiba Corp.), 20 January, 2005 (20.01.05), Column 19, lines 10 to 38 (Family: none) | 4,14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 August, 2009 (31.08.09) | 08 September, 2009 (08.09.09) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
|---|
| PCT/JP2009/062216 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 11-164322 A  (Sony Electronics, Inc.), 18 June, 1999 (18.06.99), Column 14, lines 15 to 34 & US 6259479 B1 | 5-7,15-17 |
| Y | JP 2004-343451 A  (Matsushita Electric Industrial Co., Ltd.), 02 December, 2004 (02.12.04), Claim 1 & US 2004/0228535 A1    & CN 1574968 A | 8,18 |

Form PCT/ISA/210 (continuation of second sheet) (April 2007)